# EUROPEAN PATENT SPECIFICATION

(11) **EP 0 723 885 B1**
(45) Date of publication and mention of the grant of the patent: **18.10.2000**
(21) Application number: 96300485.8
(22) Date of filing: 24.01.1996
(51) Int. Cl.: B60D 1/60

(54) **A security device**
Sicherheitsanordnung
Dispositif de sécurité.

(30) Priority: 25.01.1995 GB 9501430
(43) Date of publication of application: 31.07.1996
(73) Proprietor: INDESPENSION LIMITED, Bolton BL1 7AQ (GB)
(72) Inventor: Hargreaves, William, Deane, Bolton, BL3 4QD (GB)
(74) Representative: Low, Peter John

(56) References cited:
- WO-A-94/29131
- DE-A- 1 956 088

## Description

This invention relates to a security device for a trailer coupling.

The type of trailer coupling with which the present invention is concerned comprises a coupling body having a socket for receiving a ball on a towing vehicle. Means are provided for enlarging the entry to the socket to permit the ball on the towing vehicle to be received therein and for locking said means to prevent the coupling from being detached from a towing vehicle or, if detached, from being coupled to a vehicle. In the aforesaid detached condition even when the means for enlarging the socket is locked the trailer is not entirely secure, however, because it is still possible to insert an undersize towing ball into the socket on the coupling. In order to deal with that problem it has been proposed to fit an expandable body within the socket which can be locked in the expanded condition. This is not an entirely satisfactory solution to the problem because it requires positive steps to be taken to fit the expandable body into the socket every time the trailer is detached. If the expandable body is not conveniently to hand the trailer owner may find it too much trouble to fit it, particularly for short periods of time. It is in just these circumstances that trailers are frequently stolen. Moreover even when such a device is fitted into the socket of a trailer coupling it has still happened that the mouth of the socket of the trailer coupling could be rested on the ball of a towing vehicle and in that condition, towed away.

A security device according to the preamble of claim 1 is known from German Patent Application No. 1956088 in which a closure member is pivotally connected to a trailer and can be rotated to engage the socket of the trailer's coupling. A separate lock is required to keep the closure member in the socket.

The present invention has been made in order to improve existing security devices for trailing couplings.

According to the invention there is provided a security device for a trailer coupling, said coupling including a body, a socket in said body for receiving the ball of a towing vehicle, means moveable between a first position which prevents insertion of the towing ball into said socket or removal of the towing ball from the socket and a second position wherein the towing ball can be inserted into or removed from the socket, the security device comprising a member permanently mounted on the coupling body for movement between a first position in which the member is receivable in the coupling socket and a second position in which the member is sufficiently clear of the coupling socket to permit said socket to receive the ball of a towing vehicle, urging means being provided for urging the member towards the second position and holding the member clear of the socket when said member is released from the socket, characterised in that the security device further comprises a lock for securing the means in its said first position and also said member in its said first position.

The member that is receivable in the socket of the coupling can have any desired shape, but preferably it matches the shape of the coupling socket. In a preferred embodiment of the invention the member is attached to an arm and the arm is pivotally connected to the coupling body. Preferably the means for urging the member towards the second position is a spring.

It is also preferred that the underside of the member or of the arm on which the member is mounted be profiled as so to make it difficult to support the coupling on the ball of a towing vehicle. Preferably the profile of the underside of the member of the arm is convex.

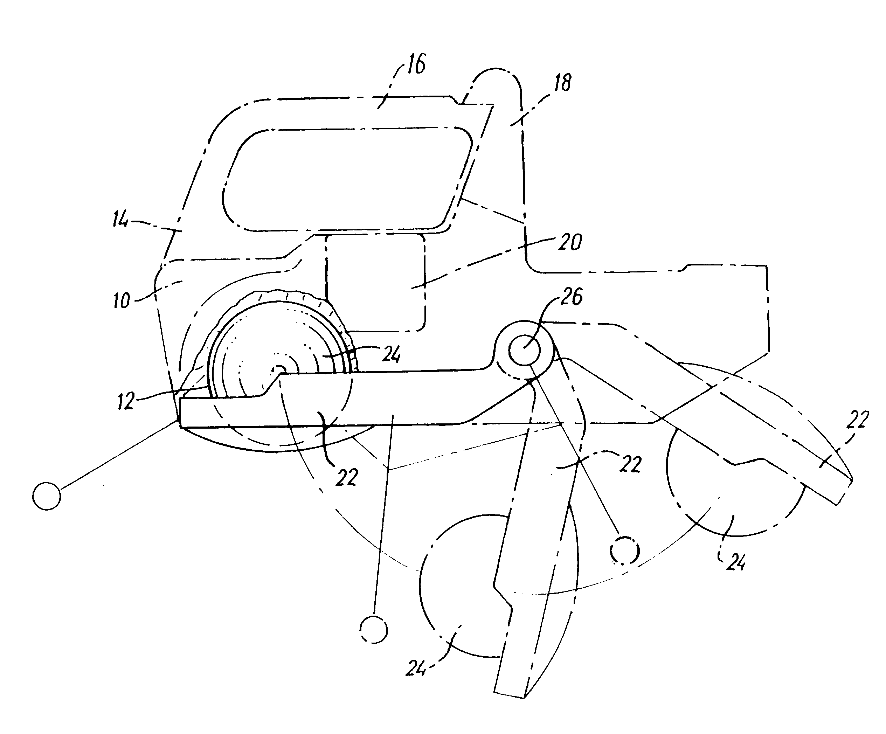

A specific embodiment of the invention will now be described by way of example with reference to the accompanying drawing which shows a coupling in side elevation and partly in section;

Referring to the drawing the coupling comprises a body 10 having a socket 12 for receiving the ball of a towing hitch. The coupling includes, in a known manner, a latch 14 having a handle 16 and a part (not shown) which extends to the socket to reduce the access to the socket. Movement of the latch is required to introduce the ball of a towing hitch into the socket or remove it therefrom. The latch can be further secured by a catch 18 and a lock 20. This kind of coupling is described in our European Patent Application No. 0611670.

On or adjacent the underside of the body an arm 22 is pivotally mounted as at 26. Towards the free end of the arm a spherical member 24 is fixed. The dimensions of the member 24 are preferably substantially the same as those of the ball of a towing hitch.

As illustrated in the drawing the arm can be moved between a position (at the right of the drawing) in which the socket is clear of obstruction and can be fitted over the ball of a towing hitch. The arm is biassed towards this position by a spring or the like. Clockwise rotation of the arm enables the member 24 to be fitted into the socket 12 thereby preventing the coupling from being fitted onto a towing hitch. It will be appreciated that the provisions for locking the latch 14 will also lock the member 24 in the socket.

The underside of the arm, below the socket, is profiled, preferably with a convex shape as shown so as to make it more difficult to lash the coupling to a towing hitch even with the member 24 in position in the socket.

The invention is not limited to the above described embodiment and many variations and modifications can be made. For example the member 24 does not have to be part spherical and its shape can be altered as desired.

## Claims

1. A security device for a trailer coupling, said coupling including a body (10), a socket (12) in said body (10) for receiving the ball of a towing vehicle, means (14,16,18,20) moveable between a first position which prevents insertion of the towing ball into said socket (12) or removal of the towing ball from the socket and a second position wherein the towing ball can be inserted into or removed from the socket (12), the security device comprising a member (22,24,26) permanently mounted on the coupling body (10) for movement between a first position in which the member (24) is receivable in the coupling socket (12) and a second position in which the member (24) is sufficiently clear of the coupling socket (12) to permit said socket (12) to receive the ball of a towing vehicle, urging means being provided for urging the member (24) towards the second position and holding the member (24) clear of the socket (12) when said member (24) is released from the socket (12), characterised in that the security device further comprises a lock (20) for securing the means (14, 16, 18, 20) in its said first position and also said member (24) in its said first position.

2. A security device as claimed in claim 1, wherein the member (24) has a shape which matches the shape of the socket.

3. A security device as claimed in claim 1 or claim 2, wherein the member (24) is attached to an arm (22) and the arm (22) is pivotally mounted on the coupling body (10).

4. A security device as claimed in any preceding claim, wherein the underside of the member (22) is profiled to make it difficult to support the coupling on the ball of a towing vehicle.

5. A security device as claimed in claim 4, wherein the underside of the member (22) is convex.

6. A security device as claimed in any one of the preceding claims, wherein the means for urging the member (24) towards the second position comprises a spring.

## Patentansprüche

1. Sicherheitsvorrichtung für eine Anhängerkupplung, wobei die Kupplung einen Körper (10), eine in dem Körper (10) ausgebildete Buchse (12) zur Aufnahme des Kupplungsballs einer Zugmaschine und eine Vorrichtung (14, 16, 18, 20) aufweist, die zwischen einer ersten Position, die das Einsetzen des Kupplungsballes in die Buchse (12) oder das Entfernen des Kupplungsballes aus der Buchse verhindert, und einer zweiten Position bewegbar ist, in der der Kupplungsball in die Buchse (12) eingesetzt oder aus ihr entfernt werden kann, wobei die Sicherheitsvorrichtung ein Glied (22, 24, 26) aufweist, das ständig an dem Kupplungskörper (10) angebracht ist und sich zwischen einer ersten Position, in der das Glied (24) von der Kupplungsbuchse (12) aufzunehmen ist, und einer zweiten Position bewegt, in der sich das Glied (24) so weit von der Kupplungsbuchse (12) gelöst hat, daß die Buchse (12) den Kupplungsball einer Zugmaschine aufnehmen kann, wobei Druckmittel vorhanden sind, um das Glied (24) in die zweite Position zu drücken und das Glied (24) auf Abstand zu der Buchse (12) zu halten, wenn das Glied (24) von der Buchse (12) gelöst ist,
dadurch gekennzeichnet, daß die Sicherheitsvorrichtung ferner eine Sperre (20) zum Festlegen der Vorrichtung (14, 16, 18, 20) in ihrer ersten Position und auch des Gliedes (24) in seiner ersten Position umfaßt.

2. Sicherheitsvorrichtung nach Anspruch 1,
bei der das Glied (24) eine Form aufweist, die zu der Form der Buchse paßt.

3. Sicherheitsvorrichtung nach Anspruch 1 oder Anspruch 2,
bei der das Glied (24) an einem Arm (22) angebracht und der Arm (22) mit dem Kupplungskörper (10) drehbar verbunden ist.

4. Sicherheitsvorrichtung nach einem vorhergehenden Anspruch,
bei der die Unterseite des Gliedes (22) profiliert ist, um das Abstützen der Kupplung auf dem Kupplungsball einer Zugmaschine zu erschweren.

5. Sicherheitsvorrichtung nach Anspruch 4,
bei der die Unterseite des Gliedes (22) konvex ist.

6. Sicherheitsvorrichtung nach einem der vorhergehenden Ansprüche,
bei der die Mittel zum Drücken des Gliedes (24) in die zweite Position eine Feder umfassen.

## Revendications

1. Dispositif de sécurité pour attelage de remorque, ledit attelage comprenant un corps (10), une cuvette (12) dans ce corps (10) destinée à recevoir la boule d'un véhicule tracteur, un moyen (14, 16, 18, 20) mobile entre une première position qui empêche l'introduction de la boule de traction dans la cuvette (12) ou l'enlèvement de celle-ci de la cuvette et une deuxième position dans laquelle la boule de traction peut être introduite dans la cuvette (12) ou en être enlevée, ce dispositif de sécurité comprenant un élément (22, 24, 26) monté en permanence sur le corps (10) de l'attelage pour se mouvoir entre une première position dans laquelle l'élément (24) peut être reçu dans la cuvette (12) de l'attelage et une deuxième position dans laquelle l'élément (24) est suffisamment dégagé de la cuvette (12) de l'attelage pour permettre à celle-ci de recevoir la boule d'un véhicule tracteur, un moyen de poussée étant prévu pour pousser l'élément (24) vers sa deuxième position et le maintenir dégagé de la cuvette (12) lorsqu'il est libéré de celle-ci, caractérisé par le fait que le dispositif de sécurité comprend en outre un verrou (20) pour fixer le moyen (14, 16, 18, 20) dans sa première position et aussi l'élément (24) dans sa première position.

2. Dispositif de sécurité selon la revendication 1, dans lequel l'élément (24) a une forme qui épouse celle de la cuvette.

3. Dispositif de sécurité selon l'une des revendications 1 et 2, dans lequel l'élément (24) est fixé à un bras (22) et ce bras (22) est monté basculant sur le corps (10) de l'attelage.

4. Dispositif de sécurité selon l'une des revendications précédentes, dans lequel le dessous de l'élément (22) est profilé pour rendre difficile le support de l'attelage par la boule d'un véhicule tracteur.

5. Dispositif de sécurité selon la revendication 4, dans lequel le dessous de l'élément (22) est convexe.

6. Dispositif de sécurité selon l'une des revendications précédentes, dans lequel le moyen de poussée de l'élément (24) vers sa deuxième position comprend un ressort.
